# EUROPEAN PATENT APPLICATION

(11) **EP 4 686 674 A1**
(43) Date of publication of application: **04.02.2026**
(21) Application number: 25191662.3
(22) Date of filing: 24.07.2025
(51) Int. Cl.: B65G 47/08, B65B 35/44

(54) **PARTITIONING DEVICE**

(30) Priority: 29.07.2024 IT 202400017587
(71) Applicant: OCME S.r.l., 43122 Parma (PR) (IT)
(72) Inventor: PRATI, Michele, 29122 Piacenza (PC) (IT)
(74) Representative: Branca, Emanuela

(57) **Abstract**

Partitioning device configured to group products and advance them to a packaging machine, comprising a first towing element movable in an advancement direction, a plurality of first towed elements defining first housings for the products and connected in series with each other to the first towing element by means of rigid articulated connections being movable with it in the advancement direction, and first advancement means connectable to the first towing element to act on it by moving it in the advancement direction in such a way that also the first towed elements move in the advancement direction from a loading area, where the products can be loaded into the first housings, to an unloading area, where the products can be unloaded from the first housings and introduced into the machine.

## Description

The present invention refers to a partitioning device, and in particular to a partitioning device configured to form groups of products and advance them to a packaging machine.

In the packaging sector, partitioning devices configured to group together products that arrive arranged in a first configuration, and to advance the groups thus formed towards a packaging machine in such a way that they can be introduced once arranged in a second configuration, have long been known. As an application example, a partitioner can receive a continuous row of products (which can be flexible, such as sachets, bags, pouches, flow wraps or doypacks, or rigid, such as cartons) transported in a horizontal position by a conveyor belt, group them in discrete groups of 10 or 12 units arranged vertically, and advance them towards the packaging machine which is designed so as to package each of said groups (or a plurality of such groups together) with a secondary or tertiary packaging. Generally, a partitioning device comprises first of all a support frame on which two identical belts are wound which are closed on respective ring paths that are identical to and placed alongside one another, in such a way that the upper parts of the belts extend parallel to each other along a horizontal advancement direction, and actuator means operable to circulate the belts along the respective ring paths with identical laws of motion. The device comprises also a plurality of first "cradles" fixed to the belts in series one behind the other, at special fixing points, and shaped in such a way to define a first "train" of first movable adjacent housings configured to receive the products and advance them in the advancement direction towards the packaging machine; by circulating the two belts, in fact, the first cradles are moved in the advancement direction from a loading area, where the products can be loaded in the first housings, to an unloading area, where the products can be unloaded and introduced into the machine, and then return to the loading area when the belts complete their movement along the respective ring paths.

Generally, the device comprises also a plurality of second cradles fixed in series one behind the other to two other belts identical to the first ones and placed alongside them on the support frame, the second cradles forming a second "train" of second movable adjacent housings in which the products can be loaded in the loading area while the first "train" travels its own route towards the unloading area and then returns again to the loading area; since the two "trains" are independently movable, it is possible to load products substantially continuously in the device (alternatively on the first "train" and on the second "train"), and adjust the movement of each "train" (by varying the advancement speed, or stopping it completely) in the direction of the packaging machine depending on the phase of the packaging cycle in progress on the machine itself. The housings, and therefore the cradles, have shapes and dimensions that depend on the shape and dimensions of the products that must be grouped and advanced to the packaging machine, and therefore every time the format of the products to be grouped and advanced to the machine is changed, it is necessary to replace the present cradles with those most suitable for the subsequent products.

This format change operation is usually carried out by dismounting, one by one, all the cradles from the belts, and mounting the cradles suitable for the subsequent products in their place. However, this solution takes a long time to apply, in addition to being constrained by the fixing points provided on the belts, which do not allow to change the pitch between two adjacent cradles at will.

Alternatively, it is possible to dismount the belts together with the cradles fixed on them, and replace them with substantially identical belts to which the cradles suitable for the subsequent products are fixed. This solution, while allowing a faster format change than the previous one, is more complicated to apply and requires experienced operators to intervene for the safe dismounting of the belts from the support frame, and also makes it necessary to have a second group of belts identical to the first ones, with the related purchase and maintenance costs.

Alternatively, it is possible to replace the entire partitioning device with a different partitioning device on whose belts the cradles suitable for the subsequent products are mounted. This solution is quite expensive, as it makes it necessary to buy and maintain a second partitioning device, which must then be taken from a special room and positioned in line every time a format change must be made.

The object of the present invention is to overcome the aforementioned drawbacks, and in particular to realize a partitioning device capable of grouping products and advancing them to a packaging machine, on which it is possible to perform a format change in a simple, fast and economical way.

A further object of the present invention is to realize a partitioning device whose housings are defined with a pitch that is determinable at will, which minimizes errors, jams and failures during the relative operation, and which is economical to make and maintain.

A further object of the present invention is to realize a partitioning device that guarantees a high stability to the products when they are loaded, when they are advanced and when they are unloaded from the device itself.

This and other results are obtained according to the present invention by realizing a partitioning device according to claim 1.

Further characteristics of the device are the object of the dependent claims.

The invention will be now described, for illustrative but not limitative purposes, according to preferred embodiments thereof, with particular reference to the figures in the accompanying drawings, in which:
- Figure 1 is a perspective view of a partitioning device according to the invention;
- Figure 2 is a perspective view of a plurality of towed elements in a relative first embodiment, which are connected in series with each other and with a first embodiment of a towing element by means of a first type of rigid articulated connection;
- Figure 3 is a perspective view of a towed element extracted from Figure 2;
- Figure 4 a perspective view of a second embodiment of the towing element;
- Figure 5 is a perspective view of a plurality of towed elements in a relative second embodiment, which are connected in series with each other and with a third embodiment of the towing element by means of a second type of rigid articulated connection;
- Figure 6 is a perspective view of Figure 5 from a different point of observation.

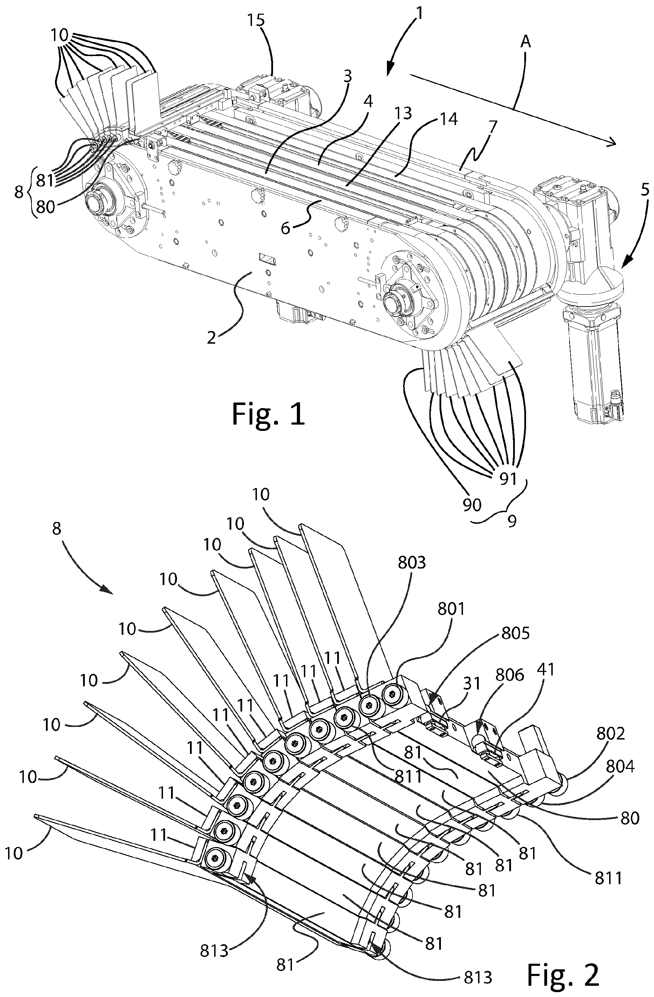

With reference to Figure 1, 1 indicates as a whole a partitioning device comprising first of all a support frame 2 raised from the ground.

The frame 2 supports first advancement means, which preferably comprise a first ring element 3 and a second (further) ring element 4 which are closed respectively on a first path and on a second (further) path that extend in the respective upper parts along an advancement direction A, the first path and the second path being substantially identical to and placed alongside one another. The first ring element 3 and the second ring element 4 consist in particular in toothed belts or chains guided on specific pulleys.

The first advancement means further comprise first actuator means operable to circulate the first ring element 3 and the second ring element 4 respectively along the first path and along the second path. Preferably, the first actuator means comprise a first electromechanical actuator 5, in particular a first gear motor, configured to drive in rotation a first pulley and a second pulley on which the first ring element 3 and the second ring element 4 are guided respectively, in such a way that the latter circulate with substantially identical laws of motion.

The frame 2 further comprises a first guide 6 (visible only in part in Figure 1) and a second guide 7 extending beside the first ring element 3 and the second ring element 4, preferably for the entire length of the latter. The first guide 6 and the second guide 7 therefore comprise respective upper portions that extend alongside the upper parts of the first ring element 3 and the second ring element 4 along the advancement direction A.

The device 1 further comprises a first towing element 80 that can be connected to the first advancement means in such a way that the first advancement means can act on it by moving it in the advancement direction A. In particular, the first towing element 80 is connectable in parallel to the first ring element 3 and the second ring element 4, so as to be movable along a closed route corresponding to the paths of the first ring element 3 and of the second ring element 4; this route in fact comprises a section that extends along the advancement direction A, corresponding to the upper parts of the first ring element 3 and the second ring element 4. The first advancement means could comprise also a single ring element connectable to the first towing element 80; however, the illustrated solution in which the first towing element 80 is connectable to two ring elements is more balanced, and less subject to errors, jams or failures in particular when grouping and advancing heavy and/or bulky products.

With reference to Figure 2, the first towing element 80 has a first wheel 801 and a second wheel 802 which are rotatable about a first rotation axis substantially perpendicular to the advancement direction A, so that said first wheel 801 and second wheel 802 can roll respectively on the first guide 6 and on the second guide 7 when the first towing element 80 is moved by the first advancement means. The first towing element 80 can preferably also have a third wheel 803 and a fourth wheel 804 placed alongside respectively the first wheel 801 and the second wheel 802 and configured to also roll respectively on the first guide 6 and on the second guide 7.

Preferably, the first towing element 80 is connectable to the first ring element 3 and to the second ring element 4 in such a way that it can be oriented by rotating with respect to them about a second rotation axis substantially perpendicular to the advancement direction A. In this way, the first ring element 3 and the second ring element 4 are subjected to limited stresses even when the first towing element 80 travels along the curved sections of its own route, i.e. in particular those corresponding to the pulleys on which the first ring element 3 and the second ring element 4 are guided.

More in particular, the second rotation axis substantially coincides with the first rotation axis, in such a way as to further limit the stresses on the first ring element 3 and on the second ring element 4. Preferably, the first towing element 80 is connectable to the first ring element 3 and to the second ring element 4 by means of respectively a first hooking element and a second hooking element, which are interposed between the first towing element 80 and respectively the first ring element 3 and the second ring element 4.

In a first embodiment, visible in particular in Figure 2, the first hooking element 31 and the second hooking element 41 are fixed respectively to the first ring element 3 and to the second ring element 4 in such a way as to protrude with respect to them, and have protruding cylinder portions whose axis extends perpendicularly to the advancement direction A. The first towing element 80 instead has a first seat 805 and a second seat 806 configured to respectively house the first hooking element 31 and the second hooking element 41 in such a way that the latter can be oriented by rotating within the respective seat around the second rotation axis; in particular the first seat 805 and the second seat 806 are shaped as open slots having appropriate lead-in chamfers, thus being complementary to the cylinder portions respectively of the first hooking element 31 and of the second hooking element 41. This solution allows a particularly fast connection between the first towing element 80 and the first ring element 3 and the second ring element 4, and does not require the use of tools. This solution, not realizing constraints in a direction perpendicular to the advancement direction A, also implements a sort of mechanical fuse, since the first hooking element 31 and the second hooking element 41 can automatically exit from the first seat 805 and from the second seat 806 in the event that, in an emergency situation, an excessive relative rotation between the first towing element 80 and the first ring element 3 and the second ring element 4 is triggered, quickly disconnecting the first towing element 80 from the first ring element 3 and from the second ring element 4.

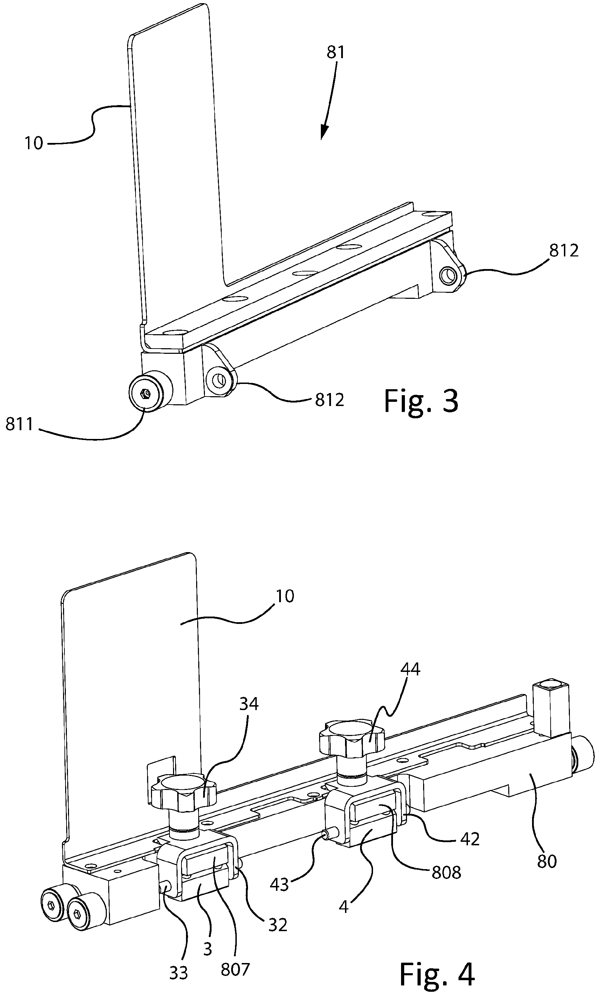

In a second embodiment, visible in particular in Figure 4, the first hooking element 32 and the second hooking element 42 are respectively connected to the first ring element 3 and to the second ring element 4 in such a way that they can be oriented by rotating with respect to them around the second rotation axis. For example, the first hooking element 32 and the second hooking element 42 can have a fork shape and be hinged to the first ring element 3 and to the second ring element 4 by means of the pins 33, 43. The first towing element 80 in this case has two protruding elements 807, 808 that can be fixed to the first hooking element 32 and to the second hooking element 42 by means of two screwable knobs 34, 44.

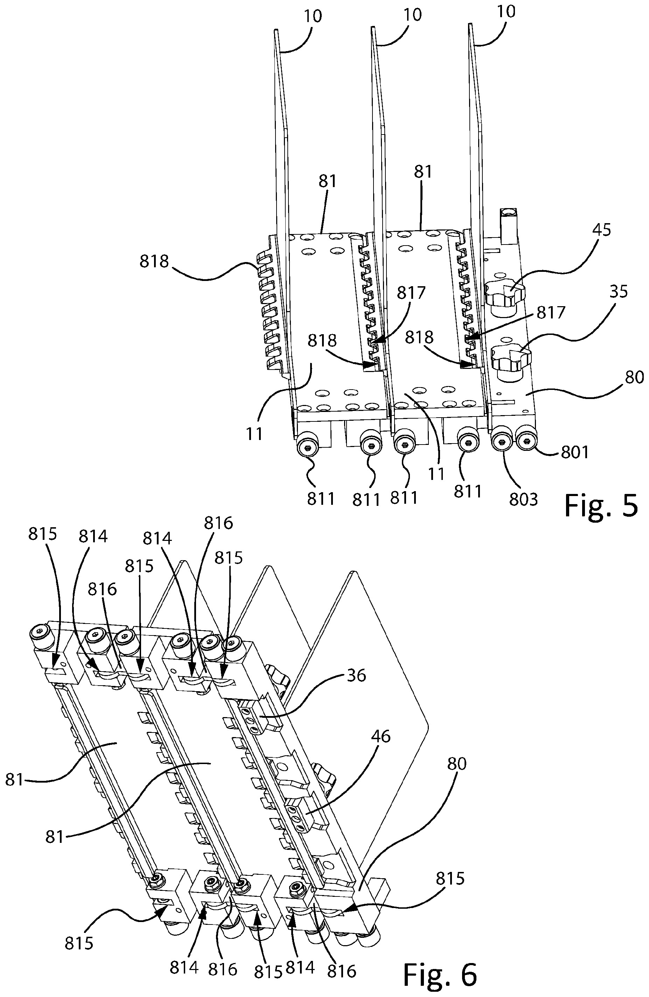

In a third embodiment, visible in particular in Figures 5 and 6, the first hooking element 36 and the second hooking element 46 are fixed respectively to the first ring element 3 and to the second ring element 4, while the first towing element 80 is directly fixable to the first hooking element 36 and to the second hooking element 46 by means of two screwable knobs 35, 45. In this way, the first towing element 80 is fixable to the first ring element 3 and to the second ring element 4. Again with reference to Figure 1, the device 1 comprises a plurality of first towed elements 81 which are connected in series with each other to the first towing element 80 in such a way that, when the first towing element 80 is moved by the first advancement means along its own route, the first towed elements 81 follow in motion the first towing element 80 forming a first train 8.

The first towed elements 81 define first housings in which the products can be loaded. More in particular, each first towed element 81 comprises a base 11 and an abutment element 10 extending substantially perpendicularly to the advancement direction A, such that each first housing is defined by a base 11 and by two adjacent abutment elements 10. The abutment elements 10 preferably consist of plates.

Also the first towing element 80 comprises an abutment element 10 extending substantially perpendicularly to the advancement direction A, which defines a first housing with the abutment element 10 and the base 11 of the first towed element 81 adjacent thereto. Preferably, each first towed element 81 has one or more pairs of wheels 811 which are configured to roll on the first guide 6 and on the second guide 7 when the first towing element 80 is moved by the first advancement means and drags in its motion along its own route the first towed elements 81. In this way, each first housing is defined by two pairs of wheels 811.

The first towed elements 81 are connected to each other and to the first towing element 80 by means of rigid articulated connections. In this way the first towed elements 81 can follow the first towing element 80 in its motion limiting the oscillations that could lead to errors in loading the products, jams and failures of the device 1. In fact, the products are steadily positioned in the respective housings.

Each rigid articulated connection only allows the relative rotation of the elements connected to each other around at least one pivot axis substantially perpendicular to the advancement direction A, so that the train 8 can move while maintaining its rigidity even at the pulleys on which the first ring element 3 and the second ring element 4 are guided. Preferably, each pivot axis around which the relative rotation is allowed between two first adjacent towed elements 81 coincides with the rotation axis of a pair of wheels 811. Furthermore, preferably, a pivot axis around which the rotation is allowed between the first towing element 80 and the towed element 81 adjacent to it coincides with the rotation axis of the third wheel 803 and the fourth wheel 804.

In this way, the device 1 is subjected to limited stresses even when the first towed elements 81 travel along the curved sections of their route, i.e. in particular those corresponding to the pulleys on which the first ring element 3 and the second ring element 4 are guided.

In a first example, visible in particular in Figures 2 and 3, at least part of the rigid articulated connections (preferably all) are made as hinges between the elements connected to each other. In particular, with reference to Figure 3, each first towed element 81 has at least one front perforated protrusion 812 and a rear seat 813 (visible in Figure 2) shaped in such a way as to be able to house the front perforated protrusion 812 of the adjacent first towed element 81, so that the front perforated protrusion 812 and the rear seat 813 can be coupled to each other like a hinge by means of a pin (not visible in the Figure). The first towing element 80 also has at least one rear seat 813 configured to house the front perforated protrusion 812 of the first towed element 81 adjacent thereto.

In this way each rigid articulated connection allows the relative rotation of the elements connected to each other around a single pivot axis substantially perpendicular to the advancement direction A.

Preferably, each first towed element 81 has two front perforated protrusions 812 and two rear seats 813 arranged on opposite sides of the base 11 of the first towed element 81. Preferably, moreover, the first towing element also has two rear seats 813.

Preferably, in this first example each first towed element 81 has a single pair of wheels 811 at the sides, whose rotation axis coincides with the single pivot axis around which the relative rotation is allowed between two adjacent first towed elements 81. The single pivot axis around which the rotation is allowed between the first towing element 80 and the first towed element 81 adjacent to it instead coincides with the rotation axis of the third wheel 803 and of the fourth wheel 804. In this way, each first housing is defined by a first pair of wheels 811 which is "shared" with the previous first housing and by a second pair of wheels 811 which is "shared" with the subsequent first housing.

In a second example, visible in particular in Figures 5 and 6, at least part of the rigid articulated connections (preferably all) are made by means of rigid elements interposed between, and hinged to, the elements connected to each other. In particular, with reference to Figure 6, each first towed element 81 has at least a front seat 814 and a rear seat 815, and the rigid articulated connections are made by connecting rods 816 having a perforated head and a perforated tail: the perforated head of each connecting rod 816 is housed and hinged in the rear seat 815 of a first towed element 81, while the perforated tail of the same connecting rod 816 is housed and hinged in the front seat 814 of the subsequent first towed element 81. The first towing element 80 also has at least one rear seat 815 in which the perforated head of a connecting rod 816 can be housed and hinged, the perforated tail of which is instead housed and pivoted in the front seat 814 of the first towed element 81 adjacent to the first towing element 80.

In this way each rigid articulated connection allows the relative rotation of the elements connected to each other around two pivot axes parallel to each other (one called "front" and one called "rear") and substantially perpendicular to the advancement direction A, one (front) passing through the perforated head of the connecting rod 816 and one (rear) passing through the perforated tail of the connecting rod 816.

Preferably, each first towed element 81 has two front seats 814 and two rear seats 815 arranged on opposite sides of the base 11 of the first towed element 81, and each rigid articulated connection is therefore made by means of two connecting rods 816. Preferably, moreover, the first towing element also has two rear seats 815. Preferably, in this second example, each first towed element 81 has two pairs of wheels 811 at the sides (one called "front", and one called "rear"). The front pivot axis around which the rotation is allowed between the first towing element 80 and the first towed element 81 adjacent thereto coincides with the rotation axis of the third wheel 803 and of the fourth wheel 804, while the rear pivot axis coincides with the rotation axis of the pair of front wheels 811 of said first towed element 81.

Similarly, the front pivot axis around which the rotation is allowed between two first adjacent towed elements 81 (one called "front" and one called "rear") coincides with the rotation axis of the rear pair of wheels 811 of the front first towed element 81, while the rear pivot axis coincides with the rotation axis of the front pair of wheels 811 of the rear first towed element 81.

In this way, each first housing is defined by the front pair of wheels 811 and by the rear pair of wheels 811 of a same first towed element 81.

Preferably, with reference to Figures 5 and 6, the base 11 of each first towed element 81 has a toothed front edge 817 and a toothed rear edge 818 which is configured to be interlocked with the front edge 817 of the base 11 of the first adjacent towed element 81, but being able to move freely with respect to it by rotating around the at least one pivot axis. Also the first towing element 80 has a toothed rear edge 818 configured to be interlocking with the front edge 817 of the first towed element 81 adjacent thereto. In this way, the bases 11 of the first towed elements 81 define a substantially continuous rest surface for the products in the housings, even when the first train 8 travels along the curved sections of its own route, i.e. in particular those corresponding to the pulleys, and the adjacent elements rotate with respect to each other around the at least one pivot axis.

Again with reference to Figure 1, the frame 2 also supports second advancement means, which preferably comprise a third ring element 13 and a fourth (further) ring element 14 which are closed respectively on a third path and on a fourth (further) path that extend in the respective upper parts along the advancement direction A, the third path and the fourth path being substantially identical to the first path and the second path and placed alongside them. In particular, the third ring element 13 and the fourth ring element 14 also preferably consist of toothed belts or chains guided on specific pulleys.

The second advancement means further comprise second actuator means operable independently of the first actuator means to circulate the third ring member 13 and the fourth ring member 14 respectively along the third path and along the fourth path. Preferably the second actuator means comprise a second electromechanical actuator 15, in particular a second gear motor, configured to drive in rotation a third pulley and a fourth pulley on which the third ring element 13 and the fourth ring element 14 are guided respectively.

The device 1 further comprises a second towing element 90 which can be connected to the second advancement means in such a way that the second advancement means can act on it by moving it in the advancement direction A independently of the movement of the first towing element 80. In particular, the second towing element 90 is connectable in parallel to the third ring element 13 and to the fourth ring element 14, so as to be movable along the same closed route along which the first towing element 80 is movable.

The second towing element 90 is substantially identical to the first towing element 80, and has a plurality of wheels which are configured to roll on the first guide 6 and on the second guide 7 when the second towing element 90 is moved by the second advancement means.

Preferably, also the second towing element 90 is connectable to the third ring element 13 and to the fourth ring element 14 in such a way as to be able to rotate with respect to them about a third rotation axis substantially perpendicular to the advancement direction A, wherein said third rotation axis substantially coincides with the rotation axis of the respective wheels.

Still with reference to Figure 1, the device 1 comprises also a plurality of second towed elements 91 substantially identical to the first towed elements 81, which are connected in series with each other to the second towing element 90 in such a way that, when the second towing element 90 is moved by the second advancement means along its own route, the second towed elements 91 follow in motion the second towing element 90 forming a second train 9 that is substantially identical to the first train 8 and movable independently of the latter.

The second towed elements 91 define second housings in which the products can be loaded.

Furthermore, the second towed elements 91 are connected to each other and to the second towing element 90 by means of rigid articulated connections, substantially identical to the rigid articulated connections that connect the first towed elements 81 to each other and to the first towing element 80.

In use, the first train 8 is initially located in a loading area (as represented in Figure 1), in which the products are loaded into the first housings in such a way as to form a first group of products. For example, the products can be transported in a horizontal position in the loading area by a conveyor belt (not represented in the figures) that extends parallel to the advancement direction A upstream of the device 1, and be loaded into the first housings by means of a jerky movement of the first train 8 that allows a first housing, which is empty and suitably inclined (as it is located at the guide pulleys of the first ring element 3 and the second ring element 4), to be presented from time to time in front of the exit area of the conveyor belt.

The first train 8 is then advanced in the advancement direction A by the first advancement means until reaching an unloading area, in which the first train 8 can slow down or stop to allow the first group of products to be unloaded from the first housings and introduced into the packaging machine. For example, once it reaches the unloading area, the first group of products can be introduced into the machine by means of a robotic arm that pushes the products out of the first housings. It should be noted that during the advancement the first housings are arranged vertically (as they are located at the upper, horizontal parts of the first ring element 3 and of the second ring element 4), also arranging the loaded products vertically.

Meanwhile, in the preferred embodiment of the invention wherein the device 1 comprises both a first train 8 and a second train 9 which are movable independently of each other, when the first train 8 leaves the loading area, the second train 9 is arranged in the loading area such that further products are loaded in the second housings forming a second group of products.

The second train 9 is then advanced in the advancement direction A by the second advancement means until it reaches the unloading area, where it can also slow down or stop to allow the second group of products to be unloaded from the second housings and introduced in the packaging machine. When the second train 9 leaves the loading area, the first train 8, from which the first group of products has already been unloaded, is arranged again in the loading area so that further products are loaded into the second housings forming a third group of products, restarting the cycle.

In this way, the device 1 is able to load products substantially continuously, and to advance these products in groups to the packaging machine at a rate that can be adjusted based on the phase of the packaging cycle in progress on the machine itself.

When the format of the products to be grouped and advanced to the machine is changed, it is sufficient to remove the upper portions of the first guide 6 and of the second guide 7, and then disconnect the first towing element 80 and the second towing element 90 respectively from the first advancement means and from the second advancement means, and remove them from the device **1:** since the first towed elements 81 and the second towed elements 91 are connected in series with each other respectively to the first towing element 80 and to the second towing element 90, they can also be removed from the device 1 together with the first towing element 80 and the second towing element 90 with no need to perform further any dismounting operations.

At this point a third train is connected to the first advancement means, wherein the third train consists of a third towing element and a plurality of third towed elements that define third housings suitable for housing the subsequent products. The third towed elements are also connected in series with each other to the third towing element by means of rigid articulated connections, and therefore it is sufficient to connect only the third towing element to the first advancement means to connect the entire third train to them.

A fourth train, substantially identical to the third train and therefore composed by a fourth towing element and a plurality of fourth towed elements connected to it by means of rigid articulated connections, is connected to the second advancement means. Finally, the upper portions of the first guide 6 and of the second guide 7 are repositioned.

In this way it is possible to carry out a format change of the device 1 in a simple, fast and economical way, as the operator in charge is only required to dismount the two towing elements (thus also removing the towed elements integral therewith) present on the device 1 and to mount the two further towing elements in their place (thus also positioning the towed elements integral therewith).

Furthermore, the fact that only the towing elements 80, 90 are directly connected to the advancement means, allows to define at will the pitch between the towed elements 81, 91 and therefore the dimension of the housings, simply by using towed elements 81, 91 of the preferred dimensions.

The present invention has been described, by way of nonlimiting example, according to preferred embodiments, but it is to be understood that changes and/or modifications may be made by the person skilled in the art, without departing from the relative scope of protection, as defined in the appended claims.

## Claims

1. Partitioning device (1) configured to group products and advance them to a packaging machine, comprising a first towing element (80) movable in an advancement direction (A), a plurality of first towed elements (81) that define first housings for the products and are connected in series with each other to the first towing element (80) by means of rigid articulated connections being movable with it in the advancement direction (A), and first advancement means (3, 4, 5) connectable to the first towing element (80) to act on it by moving it in the advancement direction (A) in such a way that also the first towed elements (81) move in the advancement direction (A) from a loading area, where the products can be loaded into the first housings, to an unloading area, where the products can be unloaded from the first housings and introduced into the machine;
wherein the first advancement means comprise at least a first ring element (3), in particular a belt or a chain, closed on a first path extending in part along the advancement direction (A), and first actuator means (5) operable to circulate the first ring element (3) along the first path;
**characterized in that** the first towing element (80) is connectable to the first ring element (3) by means of a first hooking element (31, 32, 36) interposed between them, in such a way as to be able to rotate with respect to the first ring element (3) around a second rotation axis substantially perpendicular to the advancement direction (A),
and **in that** the first towing element (80) comprises at least a first wheel (801) and a second wheel (802) which are configured to roll, when the first towing element (80) is moved in the advancement direction (A), respectively along a first guide (6) and a second guide (7) extending in part along the advancement direction (A), the first wheel (801) and the second wheel (802) being rotatable about a first rotation axis substantially coincident with the second rotation axis.

2. Device (1) according to claim 1, wherein the first advancement means also comprise a second ring element (4), in particular a second belt or a second chain, closed on a second path that is substantially identical to and placed alongside the first path, the first actuator means (5) being operable also to circulate the second ring element (4) along the second path, the first towing element (80) being connectable also to the second ring element (4) by means of a second hooking element (41, 42, 46) interposed between them, in such a way as to be able to rotate with respect to the second ring element (4) around the second rotation axis.

3. Device (1) according to any one of the preceding claims, comprising a second towing element (90) movable in the advancement direction, a plurality of second towed elements (91) that define second housings for the products and are connected in series with each other to the second towing element (90) by means of rigid articulated connections being movable with it in the advancement direction (A), and second advancement means (13, 14, 15) connectable to the second towing element (90) to act on it by moving it in the advancement direction (A) in such a way that the second towed elements (91) also move in the advancement direction (A) from the loading area to the unloading area;
wherein the second advancement means comprise at least a third ring element (13), in particular a third belt or a third chain, closed on a third path extending in part along the advancement direction (A), and second actuator means (15) operable to circulate the third ring element (13) along the third path, the second towing element (90) being connectable to the third ring element (13) by means of a third hooking element in such a way as to be able to rotate with respect to the third ring element (13) about a third rotation axis substantially perpendicular to the advancement direction (A);
wherein the second towing element (90) comprises a plurality of wheels which are configured to roll, when the second towing element (90) is moved in the advancement direction (A), along the first guide (6) and the second guide (7), said wheels being rotatable about a rotation axis substantially coincident with the third rotation axis.

4. Device (1) according to claim 3, wherein the second advancement means comprise also a fourth ring element (14), in particular a fourth belt or a fourth chain, closed on a fourth path that is substantially identical to and placed alongside the third path, the second actuator means (15) being operable also to circulate the fourth ring element (14) along the fourth path, the second towing element (90) being connectable also to the fourth ring element (14) by means of a fourth hooking element in such a way as to be able to rotate with respect to the fourth ring element (14) around the third rotation axis.

5. Device (1) according to any one of the preceding claims, wherein each rigid articulated connection only allows a relative rotation between two adjacent towed elements (81, 91) or between the towing element (80, 90) and the towed element (81, 91) adjacent thereto, around at least one respective pivot axis substantially perpendicular to the advancement direction (A).

6. Device (1) according to claim 5, wherein at least part of the rigid articulated connections are made as hinges between two adjacent towed elements (81, 91) or between the towing element (80, 90) and the towed element (81, 91) adjacent thereto, each rigid articulated connection thus defining a single pivot axis.

7. Device (1) according to claim 6, wherein the towing element (80, 90) comprises also a third wheel (803) and a fourth wheel (804) which are configured to roll, when the first towing element (80) is moved in the advancement direction (A), respectively along the first guide (6) and the second guide (7), and wherein each towed element (81, 91) has a pair of wheels (811) which are configured to roll, when the towing element (80, 90) is moved in the advancement direction (A), along the first guide (6) and the second guide (7), wherein:
- the pivot axis around which the relative rotation is allowed between the towing element (80, 90) and the towed element (81, 91) adjacent to it substantially coincides with the rotation axis of the third wheel (803) and the fourth wheel (804); and
- the pivot axis around which the relative rotation is allowed between a front towed element (81, 91) and a rear towed element (81, 91) adjacent to each other substantially coincides with the rotation axis of the pair of wheels (811) of the front towed element (81, 91) .

8. Device (1) according to claim 5, wherein at least part of the rigid articulated connections are made by means of rigid elements (816) interposed between, and hinged to, two adjacent towed elements (81, 91) or interposed between, and hinged to, the towing element (80, 90) and the towed element (81, 91) adjacent thereto, each rigid articulated connection thus defining a front pivot axis and a rear pivot axis parallel to each other.

9. Device (1) according to claim 8, wherein the towing element (80, 90) comprises also a third wheel (803) and a fourth wheel (804) which are configured to roll, when the first towing element (80) is moved in the advancement direction (A), respectively along the first guide (6) and the second guide (7), and wherein each towed element (81, 91) has a front pair of wheels (811) and a rear pair of wheels (811) which are configured to roll, when the towing element (80, 90) is moved in the advancement direction (A), along the first guide (6) and the second guide (7), wherein:
- the front pivot axis around which the relative rotation is allowed between the towing element (80, 90) and the towed element (81, 91) adjacent to it substantially coincides with the rotation axis of the third wheel (803) and the fourth wheel (804);
- the rear pivot axis around which the relative rotation is allowed between the towing element (80, 90) and the towed element (81, 91) adjacent to it substantially coincides with the rotation axis of the front pair of wheels (811) of the towed element (81, 91) adjacent to the towing element (80, 90);
- the front pivot axis about which the relative rotation is allowed between a front towed element (81, 91) and a rear towed element (81, 91) adjacent to each other substantially coincides with the rotation axis of the rear pair of wheels (811) of the front towed element (81, 91); and
- the rear pivot axis around which the relative rotation is allowed between a front towed element (81, 91) and a rear towed element (81, 91) adjacent to each other substantially coincides with the rotation axis of the front pair of wheels (811) of the rear towed element (81, 91).

10. Device (1) according to any one of the preceding claims, wherein each hooking element (31, 41) is fixed to the corresponding ring element (3, 4, 13, 14) in such a way as to protrude with respect thereto, and each towing element (80, 90) has a relative seat (805, 806) in which the corresponding hooking element (31, 41) can be housed by being able to rotate around the corresponding rotation axis.

11. Device (1) according to claim 10, wherein each hooking element (31, 41) has a cylinder portion having an axis extending perpendicularly to the advancement direction (A), and wherein each seat (805, 806) is shaped as an open slot having lead-in chamfers and is complementary to the cylinder portion of the relative hooking element (31, 41).

12. Device (1) according to any one of claims 1 to 9, wherein each hooking element (32, 42) is connected to the corresponding ring element (3, 4, 13, 14) in such a way as to be able to rotate with respect to it about the corresponding rotation axis, each towing element (80, 90) being fixable to the corresponding hooking element (32, 42).

13. Device (1) according to any one of the preceding claims, wherein each towing element (80, 90) and each towed element (81, 91) comprises an abutment element (10) extending substantially perpendicularly to the advancement direction (A), each housing being defined between the abutment elements (10) of two adjacent towed elements (81, 91) or between the abutment element (10) of a towing element (80, 90) and the abutment element (10) of the towed element (81, 91) adjacent thereto.
